# EUROPEAN PATENT SPECIFICATION

(11) **EP 2 724 580 B1**
(45) Date of publication and mention of the grant of the patent: **13.06.2018**
(21) Application number: 11727976.0
(22) Date of filing: 23.06.2011
(51) Int. Cl.: H04W 72/04, H04W 76/20

(54) **INTERFERENCE CONTROL**
INTERFERENZSTEUERUNG
COMMANDE D'INTERFÉRENCE

(43) Date of publication of application: 30.04.2014
(73) Proprietor: Nokia Solutions and Networks Oy, 02610 Espoo (FI)
(72) Inventor: HORNEMAN, Kari Veikko, FI-90800 Oulu (FI); VAN PHAN, Vinh, FI-90100 Oulu (FI); YU, Ling, FI-90650 Oulu (FI)
(74) Representative: Borgström, Markus
(86) International application number: PCT/EP2011/060550
(87) International publication number: WO 2012/175136

(56) References cited:
- EP-A2- 2 073 586
- WO-A1-2011/163201
- NTT DOCOMO: "Downlink Interference Coordination Between eNodeB and Home eNodeB", 3GPP DRAFT; R4-093244, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090824, 24 August 2009 (2009-08-24), XP050392889,
- KYOCERA: "Network Assisted Interference Coordination between Macro eNodeB and Home eNodeB in Downlink", 3GPP DRAFT; R4-093620, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050393232,
- "LTE; Evolved Universal Terrestrial Radio Access (E-UTRA); FDD Home eNode B (HeNB) Radio Frequency (RF) requirements analysis (3GPP TR 36.921 version 10.0.0 Release 10)", TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 4, no. V10.0.0, 1 May 2011 (2011-05-01), XP014065662,
- "3rd Generation Partnership Project; Technical Specification Group Radio Access Network; Evolved Universal Terrestrial Radio Access Network (E-UTRAN); Self-configuring and self-optimizing network (SON) use cases and solutions (Release 9)", 3GPP STANDARD; 3GPP TR 36.902, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.3.1, 1 April 2011 (2011-04-01), pages 1-21, XP050477264,
- ZTE: "Discussion on CRS interference and CSI measurements in macro-pico deployment", 3GPP DRAFT; R1-105969_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jacksonville, USA; 20101115, 10 November 2010 (2010-11-10), XP050489768,

## Description

This disclosure relates to interference control in a communication environment where a plurality of local access nodes can be provided.

A communication system can be seen as a facility that enables communication sessions between two or more nodes such as fixed or mobile communication devices, base stations, servers and so on. A communication system and compatible communicating nodes typically operate in accordance with a given standard or specification which sets out what the various entities associated with the system are permitted to do and how that should be achieved. For example, the standards, specifications and related protocols can define the manner how various aspects of communication shall be implemented between communicating devices. A communication can be carried on wired or wireless carriers.

In a wireless communication system at least a part of communications between the nodes occurs over one of more wireless links. Examples of wireless systems include public land mobile networks (PLMN) such as cellular networks, satellite based communication systems and different wireless local systems, for example wireless local area networks (WLAN) and stations proving local service areas. A wireless system can be divided into cells or other radio coverage or service areas. A radio service area is provided by a station. Radio service areas can overlap, and thus a communication device in an area can typically send signals to and receive signals from more than one station. An example of wireless communication systems is an architecture that is being standardized by the 3rd Generation Partnership Project (3GPP). This system is often referred to as the long-term evolution (LTE) of the Universal Mobile Telecommunications System (UMTS) radio-access technology. A further development of the LTE is often referred to as LTE-Advanced.

A user can access the communication system by means of an appropriate communication device. A communication device of a user is often referred to as user equipment (UE) or terminal. A communication device is provided with an appropriate signal receiving and transmitting arrangement for enabling communications with other parties. Typically a communication device is used for enabling receiving and transmission of communications such as speech and data. In wireless systems a communication device provides a transceiver station that can communicate with another communication device such as e.g. a base station and/or another user equipment. The communication device may access a carrier provided by a station and transmit and/or receive communications on the carrier.

A communication system can comprise different types of radio service areas providing transmission/reception points for the users. For example, in LTE-Advanced the transmission/reception points can comprise wide area network nodes such as a macro eNode B (eNB) which may, for example, provide coverage for an entire cell or similar radio service area. Network nodes can also be small or local radio service area network nodes. Such nodes are called, for example, Home eNBs (HeNB) or femto nodes and pico eNodeBs (pico-eNB). Just to give an example, the range of a picocell is 200 meters or less, and a femtocell is on the order of 10 meters. The smaller radio service areas can be located wholly or partially within a larger radio service area. A user equipment may thus be located within, and thus communicate with, more than one radio service area. The nodes of the smaller radio service areas may be configured to support local offload. The local nodes can also, for example, be configured to extend the range of a cell.

Deployment of local access nodes such as femto nodes is not coordinated. The random position of the femto access nodes can result a situation where collocated femto nodes are randomly positioned close next to each other. For example, there may only be a relatively thin wall between them, either horizontally or vertically, in a populated residential or office building block or area. Those femto access nodes may severely interfere with each other, in particular if operating on same or shared spectrum resource, especially in highly-loaded traffic situations. This can result in an operation-and-performance outage that can affect all involved collocated femto access nodes. European patent publication no. EP 2073586 relates to spectrum allocation in wireless communications systems

Time division multiplexing (TDM) based semi-static time-sharing and frequency division multiplexing (FDM) based semi-static partitioning coordination between collocated femto access nodes have been studied by the 3GPP in an attempt to resolve the problem. These coordination techniques, however, may not be able to appropriately resolve the interference issue in all occasions, for example in enhancing or resolving possible co-channel outage on cell-specific fixed control channels affecting normal cell operations.

It is noted that the above discussed issues are not limited to any particular communication environment, but may occur in any appropriate communication environment where uncoordinated access nodes may be provided.

Embodiments of the invention aim to address one or several of the above issues. In accordance with an embodiment there is provided a method for controlling interference, comprising initiating cooperation between at least two access nodes in response to an indication of interference affecting wireless communications by access nodes, determining at least one local access node for discontinued wireless communications, and causing discontinuation of at least a part of wireless communications of the at least one local access node, the method comprising at least one of: switching the at least one local access node into a discontinuous reception or transmission mode or a stand-by mode; and switching off a transmitter of the at least one local access node.

In accordance with an embodiment there is provided an apparatus for interference control, the apparatus comprising at least one processor, and at least one memory including computer program code, wherein the at least one memory and the computer program code are configured, with the at least one processor, to initiate cooperation between at least two access nodes in response to an indication of interference affecting wireless communications by access nodes, determine at least one local access node for discontinued wireless communications, and cause discontinuation of at least a part of wireless communications of the at least one local access node, and at least one of: switch the at least one local access node into a discontinuous reception or transmission mode or a stand-by mode; and switching off a transmitter of the at least one local access node.

In accordance with a further embodiment there is provided an apparatus for a communication device, the apparatus comprising at least one processor, and at least one memory including computer program code, wherein the at least one memory and the computer program code are configured, with the at least one processor, to detect an existing interference control mechanisms affecting operation of a local access node associated with the communication device, and in response thereto select another access node for wireless communications.

In accordance with a more specific aspect the at least one local access node is switched into a discontinuous reception and transmission mode or a stand-by mode. The wireless communications can be discontinued on a shared spectrum resource or a channel resource. A transmitter of the at least one local access node may be switched off.

At least one communication device that is affected by the discontinued communications can be relocated from the at least one local access node.

The at least one local access node may provide a femto cell. The relocation may comprise handing the at least one communication device over to a femto cell, a pico cell or a macro cell.

Control of cooperation between local access nodes may be centralised or at least partially distributed.

Cooperation control may be based on at least one of a list of participating local access nodes, a list of users, predefined conditions triggering discontinued communications, and a policy for selecting local access nodes for discontinued communications.

The cooperation may be triggered by an indication of at least one of outage on a control channel, outage on a shared radio resource, drop in radio performance, and a number of active local access nodes exceeding a threshold.

One or more local access nodes may be determined based on at least one of: they have most neighbours, serve best-effort traffic, have the highest load, have least number of active users, experience worst outage, have least relevant advanced capabilities, and have not been recently selected for discontinued communications.

The cooperation may be instructed by communicating a request for instructing a local access node to at least temporarily discontinue at least a part of its wireless communications. Instructions for an access node to at least temporarily serve a communication device relocated from a local access node may also be communicated. The relocation request may also send also to at least one higher level access node. At least one idle communication device whose service would affected, if in active state, may be notified about the discontinued communications by the at least one local access node.

Communication devices may be informed of existing interference control cooperation between local access nodes.

Reactivation of the at least partially discontinued wireless communications and relocation of transferred communication devices back to the at least one base station may be provided in response to determining that interference control between local access nodes is no longer required.

Interference control cooperation messages can be exchanged between the local access nodes.

A node such as a base station or a mobile station can be configured to operate in accordance with the various embodiments. The apparatus may be provided in a node suitable for controlling femto nodes.

A computer program comprising program code means adapted to perform the method may also be provided.

Various other aspects and further embodiments are also described in the following detailed description and in the attached claims.

The invention will now be described in further detail, by way of example only, with reference to the following examples and accompanying drawings, in which:
Figure 1 shows a schematic diagram of a network according to some embodiments;
Figure 2 shows a schematic diagram of a mobile communication device according to certain embodiments;
Figure 3 shows a schematic diagram of a control apparatus according to some embodiments; and
Figure 4 shows a flowchart according to an embodiment.

In accordance with the present invention, a method, an apparatus, and a computer program product, as set forth in the independent claims 1, 10 and 15, respectively, are provided. Additional embodiments of the invention are described in the dependent claims.

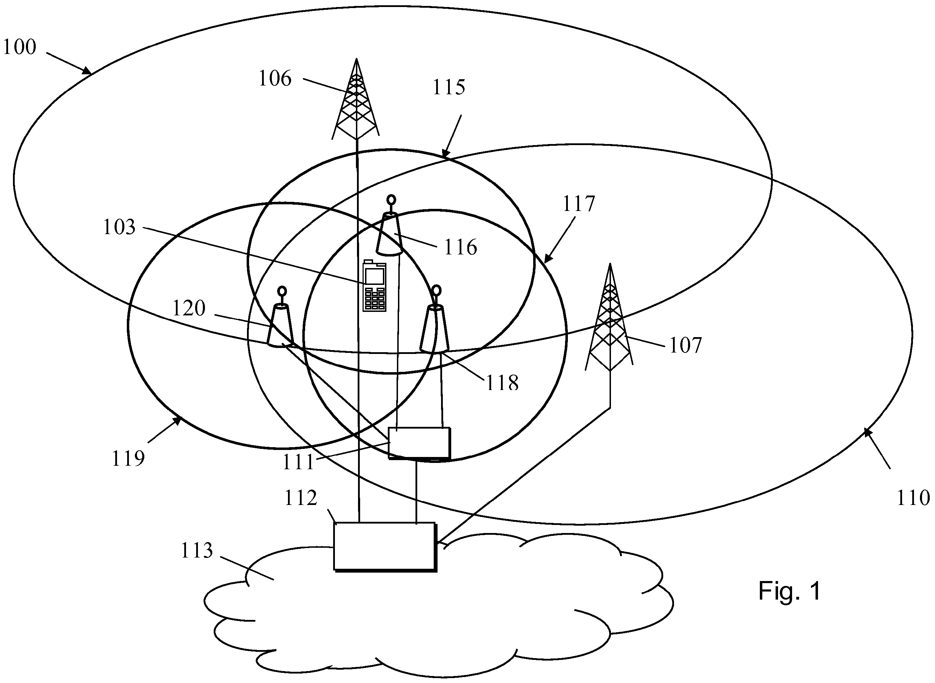

In the following certain exemplifying embodiments are explained with reference to a wireless or mobile communication system serving mobile communication devices. Before explaining in detail the exemplifying embodiments, certain general principles of a wireless communication system and mobile communication devices are briefly explained with reference to Figures 1 to 3 to assist in understanding the technology underlying the described examples.

A non-limiting example of the recent developments in communication system architectures is the long-term evolution (LTE) of the Universal Mobile Telecommunications System (UMTS) that is being standardized by the 3rd Generation Partnership Project (3GPP). As explained above, further development of the LTE is referred to as LTE-Advanced. Non-limiting examples of appropriate LTE access nodes are a base station of a cellular system, for example what is known as NodeB (NB) in the vocabulary of the 3GPP specifications. The LTE employs a mobile architecture known as the Evolved Universal Terrestrial Radio Access Network (E-UTRAN). Base stations of such systems are known as evolved or enhanced Node Bs (eNBs) and may provide E-UTRAN features such as user plane Radio Link Control/Medium Access Control/Physical layer protocol (RLC/MAC/PHY) and control plane Radio Resource Control (RRC) protocol terminations towards the user devices. Other examples of radio access system include those provided by base stations of systems that are based on technologies such as wireless local area network (WLAN) and/or WiMax (Worldwide Interoperability for Microwave Access).

In a wireless communication system mobile communication devices or user equipments (UE) 103 are provided wireless access via at least one base station or similar wireless transmitting and/or receiving node or point. In the figure 1 example two overlapping access systems or radio service areas of a cellular or macro level system 100 and 110 and three local level radio service areas 115, 117 and 119 provided by access nodes 106, 107, 116, 118 and 120, respectively, are shown. It is noted that although only three local access nodes 115, 117 and 119 are shown in Figure 1 for clarity, a great number of such local nodes and cells can be provided.

A local service area, referred to herein as a femtocell, can be provided by a femto access node. A femtocell or another local service area can be understood to refer to a cell provided a small and relatively simple base station, such as a base station designed for use in a home, business environment such as an office, or other such location. A femtocell can also cover any hotspots indoors and outdoors. A femtocell provides a low power, high-performance access device that operates in licensed spectrum, providing low-cost coverage and capacity for small areas. A femtocell can connect to a service provider's network via a data connection such as a broadband Internet backhaul. A femtocell allows service providers to extend service coverage, especially where access would otherwise be limited or unavailable. The concept is applicable to all standards, including WCDMA GSM, CDMA2000, TD-SCDMA, WiMAX and LTE solutions. In 3GPP terminology, a Home NodeB (HNB) is typically referred to as a 3G femtocell. A Home eNodeB (HeNB) is an LTE femtocell.

Deployment of local access nodes such as femto access nodes is not necessarily anyhow coordinated. For example, in a building different occupants can install a number of femto access points without any knowledge of other installations in the building. This can result a situation where collocated femto nodes are positioned relatively close next to each other. For example, there may only be relatively thin partitions such as wall, floors or some lightweight structures between the femto access nodes. This may cause interference for communications by the nodes, in particular if they are operating in same or shared spectrum resource and/or in high load situations. This can result in an operation-and-performance outage that can affect all involved collocated femto access nodes.

It is noted that only one mobile communication device 103 is shown for clarity, although a number of communication devices (active and inactive) might be located in the shown service areas. Each mobile communication device and station may have one or more radio channels open at the same time and may send signals to and/or receive signals from more than one source. It is also noted that the radio service area borders are schematically shown for illustration purposes only in Figure 1. It shall also be understood that the sizes and shapes of radio service areas may vary considerably from the shapes of Figure 1. An access node such as a base station site can provide one or more cells. A base station can also provide a plurality of sectors, for example three radio sectors, each sector providing a cell or a subarea of a cell. All sectors within a cell can be served by the same base station.

Access nodes are typically controlled by at least one appropriate controller apparatus so as to enable operation thereof and management of mobile communication devices in communication with the base stations. Each access node can have its own control apparatus. For example, a control apparatus can be provided to control the respective macro level base stations 106 and 107. It is noted that more than one macro level base station may be controlled by a control apparatus. The femto cells 115, 117 and 119 are also provided with an appropriate control apparatus. A control apparatus for controlling one of more of the cells can be interconnected with other control entities, gateways and so on. The control apparatus and functions may be distributed between a plurality of control units. In Figure 1 the macro level stations 106 and 107 are shown as connected to a wider communications network 113 via gateway 112. A further gateway function may be provided to connect to another network. The local level access nodes 116, 118 and 120 can also be connected to the network 113, for example by a separate gateway function. In the example, the femto access nodes are connected via a femto gateway 111 to the gateway 112, and there through to the network 113.

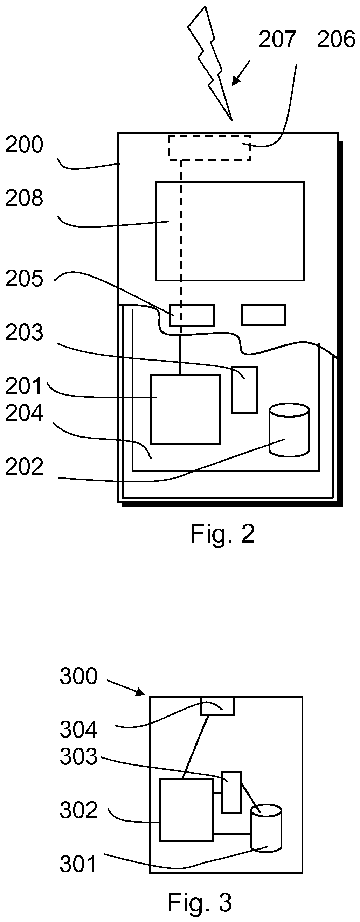

A possible mobile communication device for wireless communications with the access nodes will now be described in more detail in reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples include a mobile station (MS) such as a mobile phone or what is known as a 'smart phone', a portable computer provided with a wireless interface card or other wireless interface facility, personal data assistant (PDA) provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services include two-way or multi-way calls, data communication or multimedia services or simply an access to a data communications network system, such as the Internet. User may also be provided broadcast or multicast data. Non-limiting examples of the content include downloads, television and radio programs, videos, advertisements, various alerts and other information. The mobile device 200 may receive signals over an air interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

A mobile device is also typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

Figure 3 shows an example of a control apparatus for a communication system, for example to be coupled to and/or for controlling one or more transceiver stations of an access system. In some embodiments base stations comprise a separate control apparatus. In other embodiments the control apparatus can be another network element. The control apparatus 300 can be arranged to provide interference control coordination on wireless communications by the local access nodes the service area of the system. The control apparatus can be configured to provide control functions in association with access control, cell selection, communications with access nodes and user equipment and so on in accordance with certain embodiments described below. For this purpose the control apparatus 300 comprises at least one memory 301, at least one data processing unit 302, 303 and an input/output interface 304. Via the interface the control apparatus can be coupled to a receiver and a transmitter of the base station. The control apparatus can be configured to execute an appropriate software code to provide the control functions.

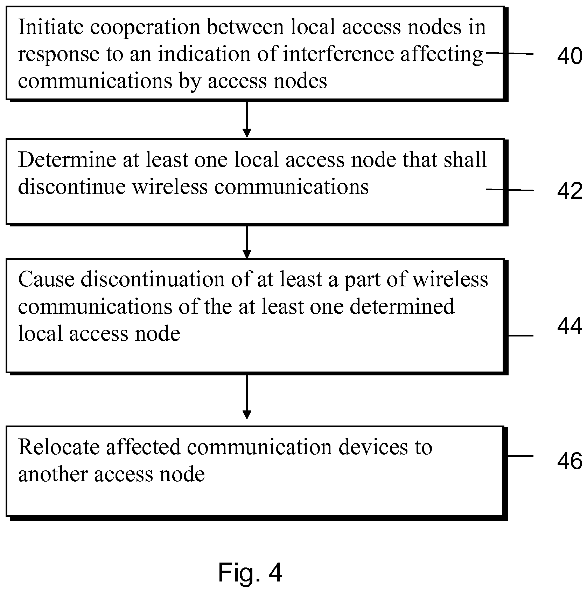

Figure 4 illustrates in a general level flow chart a possible operation in accordance with an embodiment. An interference control cooperation mechanisms is triggered at 40 in response to detection of an indication of interference affecting wireless communications by local access nodes. Indication of interference caused by the local access nodes and affecting higher level access nodes may also be used as a trigger. The indication can take various forms, some examples of which are given below. At least one local access node is then determined at 42 for discontinued wireless communications. More detailed examples for possible mechanisms and criteria for the determination will also be explained in more detail below. Discontinuation of at least a part of wireless communications of the at least one determined local access node is then caused at 44. For example, the determined at least one local access node can be switched into a discontinuous reception and transmission mode or stand-by mode and/or the transmitter thereof can simply be switched off. The switching can be temporary, for example until a predefined event or for a predefined period, or permanent.

In accordance with an embodiment at least one communication device whose service is affected by the discontinued communications is relocated from the at least one local access node at 46.

In the following certain embodiments for providing a cooperation arrangement for interference control among collocated femto access nodes to address potential inter-cell or co-channel outage situations are described in more detail. The interference control can be based on selective on-off switching of at least a part of the wireless communications by one or more selected femto access nodes. Some of the collocated femto access nodes may be nominated beforehand or dynamically selected to switch off its radio and go into a stand-by or discontinuous reception and transmission (DRX) sleep mode. The stand-by or sleep mode may be instructed for at least on a shared spectrum portion or channel where an outage is detected or determined to occur so that other femto access nodes can continue their operation.

Users affected by the reduced or switched off communications capabilities of femto access nodes may be relocated to other access nodes. Thus a communication device 103 of Figure 1 communicating via a switching-off femto access node 116 may be temporarily, or permanently, relocated to and served by another collocated femto access node, for example 120. Alternatively, such a communication device may be relocated to a selected higher level access node such as one of the overlaying macro base stations 106 or 107 of Figure 1.

In accordance with an embodiment a local access node or nodes may be switched off only for the purposes of efficient and/or optimised overall performance of the entire set of collocated neighbours, and only if users thereof can be reassured of an appropriate service by the rest of the collocated local access nodes or overlaying higher level access nodes during the switch-off period.

Mechanisms and signalling procedures to realize the interference control cooperation may be provided dynamically on-the-fly and on the need basis. Relevant femto network elements can be configured to perform one or more of the tasks required.

In accordance with an embodiment central control is provided to enable the cooperation between various access nodes. The cooperation may be configured and controlled centrally by a femto-operating network control element. For example, centralised control can be provided by a femto gateway 111 of Figure 1. Examples of other possible control entities include operation and maintenance (OAM) server, self-organizing optimizing network (SON) server and a mobile management entity (MME).

The interference control cooperation may be configured by the owner or operator of a femto access node. Configuration information for enabling the operation may include a list of femto access nodes that may participate in the cooperation, closed subscriber group (CSG) user lists of participating access nodes, predefined conditions for triggering the cooperation, policies for selecting femto access nodes to switch-off transmitters and/or receivers, and so on. The configuration information van be provided and/or configured at the network side.

The interference control coordination feature may also be arranged such that it can be switched between on and off states. Switching between on and off states may be provided for various reasons and at various times. For example, a user, owner or operator of the femto node can set the state based on his/hers preferences at the time of installing the femto node, and/or later e.g. when interference is recognised as causing problems.

In a system where interference control cooperation between local level access nodes is enabled the control can be initiated in response to detection of a need for interference control. Detection of need for cooperation in interference control may be based on detection of at least one predefined event such as for example a local radio outage or a sudden drop of local radio traffic performance, for example effective throughput or data rate. The outage may be for example on a fixed control channel and/or on any part of a shared spectrum resource. Outages may be monitored and detected 'on-the-fly' at each femto cell. Monitoring may also be provided collectively. Collective monitoring may be partially based on monitoring at individual femto access nodes in a distributed control system. This assumes that collocated femto access nodes can exchange information about the outage state of interest with each other. The monitoring may alternatively be provided at a central femto controller, such as a femto gateway, a MME, an OAM or a SON server or a particular interference control apparatus.

Detection of a need for interference control cooperation can also be based on indication based on regular radio performance monitoring functions. These include local measurements and reporting where detection of a predefined condition e.g. in view of signals strengths and/or quality can trigger the interference control operations.

A need for cooperated interference control may also be determined proactively. For example, a determination cam be made that there are too many collocated femto access nodes activated at the same time in an area. For example, it can be determined that the size of a detected neighbour list exceeds a certain threshold.

Interference control cooperation between the local level access nodes can be dynamically initiated by issuing a cooperation request. In case of a central femto controller, this can be done upon detecting a local outage of interest and determining that interference control is needed. The femto controller may then determine and select one or more femto cells that shall switch off their radios and go into sleep or stand-by mode. For example, the controller may select the most 'exposed' local access nodes which may have a largest list of detected neighbours. Another possibility is to select at least one access node that serves just best-effort traffic type and/or that has the highest load and/or the least number of active users. According to a possibility at least one such access node is selected that experiences the worst outage conditions and/or has the least relevant advanced capabilities. A possibility is to select access nodes that have not been selected recently. For example, access nodes may be selected in the basis of fairness in the order where a node with a longest time period without a switch-off selection is selected first and so forth.

The central femto controller may then issue either common or individual cooperation request to the femto access nodes of an affected group or cluster for initiating the cooperation. The request may contain embedded reconfiguration information. The request may instruct individual femto access nodes to prepare to switch off temporarily as specified and configured. All active users of those femto access node(s) that have been select to be switched off can be handed over to remaining active nodes or to selected overlaying higher level access nodes. For example, a communication device can be handed over to a macro base station or to a pico base station.

A request or notification may also be sent to communication devices using services provided by those femto access nodes that are selected for the switch-off. Such message to the users may also be addressed to selected overlay macro and/or pico access nodes as well. This can be provided, for example, for the purposes of reassuring certain service level agreements of individual femto access nodes with their subscribed operators or service providers.

Idle users, for example idle users belonging to a relevant closed subscriber group (CSG), of the selected femto access node(s) which are currently only camping in the femto access node(s) may be notified and redirected or handed over to one of the remaining femto access nodes, or to selected overlay macro base stations. Those CSG users of the selected femto access nodes that are currently away from the femto cell may be tracked, paged and notified as well.

In accordance with a further embodiment, instead of paging or notifying CSG idle communication devices or communication devices away from home, a communication device may have been arranged to detect that an interference control cooperation mechanism is operational and that the mechanism affects it. The communication device can be arranged to select one of the femto access nodes for replacement by itself. This can be provided e.g. by allowing the remaining active collocated femto access nodes to advertise about the current cooperation and indicate support for CSG of the switched-off femto access node or nodes. To provide this, the members of the CSG of the selected switched-off femto access node or nodes may be provided with a list of other collocated femto access nodes or selected overlay macro cells for possible selection of a serving cell replacement during the cooperation time. The remaining femto access nodes and the selected overlay macros can be configured to receive the members of the CSG from the switched-off femto access nodes, at least for the duration of the cooperation state.

The interference control operation may also be modified during the duration thereof. The operation may also be ended in response to a predefined event. A need to modify the cooperation or that cooperation is no longer needed may be detected or triggered based on e.g. status and performance monitoring of the remaining active femto access nodes or selected overlay macro cells involved in the cooperation. For example, changes in traffic load of local femto users including those of the switched-off femto access nodes may be monitored. A reduction in load may indicate that the switched-off node can be reactivated. It can also be monitored if a femto access node is requesting to be out of the cooperation before deactivation, and/or if a femto access node still experiences outage, interference and so on. Depending on the monitoring, one or more further femto access nodes may be selected to be switched off, if the interference situation continues, or even worsens. On the other hand, the interference conditions permitting, at least some switched-off femto access node(s) may be switched back on to resume operation. In the latter case, CSG users of those resumed femto access node(s) may be moved back to be served by their own femto access nodes, and thus the other femto access node(s) may no longer need to support CSG users of the resumed femto access node(s).

A switched-off femto access node may be able to take part in detecting and triggering a cooperation modification or end thereof. This may be the case e.g. when the switching off is only considered necessary on a part of the communication operations and the switched-off femto access nodes are only partially switched-off and thus may still be serving their users to some extent.

It is noted that the above description is mainly directed to a network controlled operation where a controller apparatus can provide at least some centralized control. A distributed control option or a hybrid decentralized arrangement may also be provided. In such arrangement an appropriate interface or other means for communications between local nodes need to be made available for communications, certain control decisions and signalling messages are made by collocated femto access nodes and exchanged between them for facilitating the cooperation. For example, neighbouring local access nodes and overlaying macro base stations can be capable of discovery and communications with each other either over a direct radio interface or via a concentrator designated for possible coordinated and cooperative deployment and operation of collocated local access nodes. Upon detecting a need for interference control cooperation by a local access node, the local access node may initiate the cooperation with its neighbours, including overlaying higher level base stations. The initiating access node can nominate itself or another node to switch its radio off, at least in part, by issuing a request. Further interactions of collocated local access nodes for e.g. the cooperation agreement, modification, and ending as described above may be carried out in the same distributed or decentralized fashion between the collocated local nodes.

The required data processing apparatus and functions of a control apparatus for central control or distributed control and/or a communication device, where appropriate, and any other node or element may be provided by means of one or more data processors. The described functions may be provided by separate processors or by an integrated processor. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non limiting examples. The data processing may be distributed across several data processing modules. A data processor may be provided by means of, for example, at least one chip. Appropriate memory capacity can also be provided in the relevant devices. The memory or memories may be of any type suitable to the local technical environment and may be implemented using any suitable data storage technology, such as semiconductor based memory devices, magnetic memory devices and systems, optical memory devices and systems, fixed memory and removable memory.

An appropriately adapted computer program code product or products may be used for implementing the embodiments, when loaded or otherwise provided on an appropriate data processing apparatus, for example for causing determinations for the need of control and selection of appropriate access nodes and subsequent operations. The program code product for providing the operation may be stored on, provided and embodied by means of an appropriate carrier medium. An appropriate computer program can be embodied on a computer readable record medium. A possibility is to download the program code product via a data network. In general, the various embodiments may be implemented in hardware or special purpose circuits, software, logic or any combination thereof. Embodiments of the inventions may be practiced in various components such as integrated circuit modules. The design of integrated circuits is by and large an automated process. Complex and powerful tools are available for converting a logic level design into a semiconductor circuit design ready to be formed on a semiconductor substrate.

The above described embodiment may provide an effective outage-avoidance solution in local-area deployment and femto services. The embodiment may be used to ensure quality of service (QoS) and/or quality of end user experience (QoE) for local users while enhancing both spectral and energy efficiency.

It is noted that whilst embodiments have been described in relation to an environment such as LTE-Advanced and/or femto access nodes, similar principles can be applied to any other communication system where interference by non-coordinated access nodes may become a problem. For example, similar issues may arise in relation to mobile hotspots and in ad-hoc networks. Therefore, although certain embodiments were described above by way of example with reference to certain exemplifying architectures for wireless networks, technologies and standards, embodiments may be applied to any other suitable forms of communication systems than those illustrated and described herein.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. For example, a combination of one or more of any of the other embodiments previously discussed can be provided. All such and similar modifications of the teachings of this invention will still fall within the scope of this invention as defined in the appended claims.

## Claims

1. A method for controlling interference, comprising:
initiating (40) cooperation between at least two access nodes (106; 107; 116; 118; 120) in response to an indication of interference affecting wireless communications by access nodes,
determining (42) at least one local access node for discontinued wireless communications, and
causing (44) discontinuation of at least a part of wireless communications of the at least one local access node,
the method **characterized by** comprising at least one of:
switching the at least one local access node into a discontinuous reception or transmission mode or a stand-by mode; and
switching off a transmitter of the at least one local access node.

2. A method according to claim 1, comprising discontinuing wireless communications on at least a shared spectrum resource or a channel resource.

3. A method according to any preceding claim, wherein the at least one local access node provides a femto cell, the method comprising relocating (46) at least one communication device (103) affected by the discontinued communications from the at least one local access node and wherein the relocating comprises handing the at least one communication device over to another femto cell, a pico cell or a macro cell.

4. A method according to any preceding claim, comprising providing centralised interference control cooperation or at least partially distributed interference control cooperation between local access nodes.

5. A method according to any preceding claim, wherein the control is based on at least one of a list of participating local access nodes, a list of users, predefined conditions triggering discontinued communications, and a policy for selecting local access nodes for discontinued communications.

6. A method according to any preceding claim, wherein the indication comprises an indication of at least one of outage on a control channel, outage on a shared radio resource, drop in radio performance, and a number of active local access nodes exceeding a threshold.

7. A method according to any preceding claim, wherein the determining comprises selecting one or more local access nodes that have at least one of: most neighbors, serve best-effort traffic, the highest load, least number of active users, experience worst outage, least relevant advanced capabilities, and the longest time period without a switch-off selection.

8. A method according to any preceding claim, comprising sending a request for instructing an access node to at least temporarily serve a communication device relocated from a local access node.

9. A method according to any preceding claim, comprising, in response to determining that interference control between local access nodes is no longer required, causing reactivation of the at least partially discontinued wireless communications and relocation of transferred communication devices back to the at least one base station.

10. An apparatus for interference control, the apparatus comprising at least one processor, and at least one memory including computer program code, wherein the at least one memory and the computer program code are configured, with the at least one processor, to
initiate cooperation between at least two access nodes (106; 107; 116; 118; 120) in response to an indication of interference affecting wireless communications by access nodes,
determine at least one local access node for discontinued wireless communications,
cause discontinuation of at least a part of wireless communications of the at least one local access node, and **characterized by** being configured to perform at least one of:
switch the at least one local access node into a discontinuous reception or transmission mode or a stand-by mode; and
switching off a transmitter of the at least one local access node.

11. An apparatus according to claim 10, wherein the apparatus is configured to cause discontinued wireless communications on at least a shared spectrum resource or a channel re-

12. An apparatus according to any of claims 10 to 11, wherein the at least one local access node provides a femto cell, wherein the apparatus is configured to cause relocation of at least one communication device (103) affected by the discontinued wireless communications from the at least one local access node, wherein the relocating comprises handing the at least one communication device over to another femto cell, a pico cell or a macro cell.

13. An apparatus according to any of claims 10 to 12, wherein the apparatus is configured to provide centralised interference control cooperation or at least partially distributed interference control cooperation between local access nodes.

14. An apparatus according to any of claims 10 to 13, wherein the apparatus is configured to trigger interference control cooperation in response to detection of at least one of outage on a control channel, outage on a shared radio resource, drop in radio performance, and a number of active local access nodes exceeding a threshold.

15. A computer program comprising code means adapted to perform the steps of any of claims 1 to 9 when the program is run on a processor.

## Patentansprüche

1. Verfahren zur Interferenzsteuerung, umfassend:
Einleiten (40) einer Zusammenarbeit zwischen zumindest zwei Zugangsknoten (106; 107; 116; 118; 120) als Antwort auf eine Angabe einer Interferenz, die drahtlose Kommunikationen durch Zugangsknoten beeinträchtigt,
Bestimmen (42) zumindest eines lokalen Zugangsknotens für unterbrochene drahtlose Kommunikationen und
Veranlassen (44) einer Unterbrechung zumindest eines Teils drahtloser Kommunikationen des zumindest einen lokalen Zugangsknotens,
wobei das Verfahren **dadurch gekennzeichnet ist, dass** es zumindest eines umfasst von:
Umschalten des zumindest einen lokalen Zugangsknotens in einen diskontinuierlichen Empfangs- oder Sendemodus oder einen Bereitschaftsmodus; und
Ausschalten eines Senders des zumindest einen lokalen Zugangsknotens.

2. Verfahren nach Anspruch 1, umfassend ein Unterbrechen drahtloser Kommunikationen auf zumindest einer gemeinsam benutzten Spektrumressource oder einer Kanalressource.

3. Verfahren nach einem vorangehenden Anspruch, wobei der zumindest eine lokale Zugangsknoten eine Femtozelle bereitstellt, wobei das Verfahren ein Verlegen (46) zumindest einer Kommunikationsvorrichtung (103), die durch die unterbrochenen Kommunikationen beeinträchtigt ist, von dem zumindest einen lokalen Zugangsknoten umfasst und wobei das Verlegen eine Übergabe der zumindest einen Kommunikationsvorrichtung zu einer anderen Femtozelle, Pikozelle oder Makrozelle umfasst.

4. Verfahren nach einem vorangehenden Anspruch, umfassend ein Bereitstellen einer zentralisierten Interferenzsteuerungszusammenarbeit oder zumindest einer teilweise verteilten Interferenzsteuerungszusammenarbeit zwischen lokalen Zugangsknoten.

5. Verfahren nach einem vorangehenden Anspruch, wobei die Steuerung auf zumindest einer einer Liste teilnehmender lokaler Zugangsknoten, einer Liste von Benutzern, vordefinierten Bedingungen, die unterbrochene Kommunikationen auslösen, und einer Richtlinie zum Auswählen lokaler Zugangsknoten für unterbrochene Kommunikationen beruht.

6. Verfahren nach einem vorangehenden Anspruch, wobei die Angabe eine Angabe zumindest eines eines Ausfalls auf einem Steuerkanal, eines Ausfalls auf einer gemeinsam benutzten Funkressource, eines Abfalls in einer Funkleistung und einer Anzahl aktiver lokaler Zugangsknoten, die einen Schwellenwert überschreiten, umfasst.

7. Verfahren nach einem vorangehenden Anspruch, wobei das Bestimmen ein Auswählen eines oder mehrerer lokaler Zugangsknoten umfasst, die zumindest eines der Folgenden haben: die meisten Nachbarn, eine Bedienung eines bestmöglichen Verkehrs, die höchste Last, die geringste Anzahl aktiver Benutzer, einen schlimmsten Ausfall erfahren haben, am wenigsten relevante erweiterte Funktionen und den längsten Zeitraum ohne Auswahl eines Ausschaltens.

8. Verfahren nach einem vorangehenden Anspruch, umfassend ein Senden einer Anfrage zum Anweisen eines Zugangsknotens, um zumindest vorübergehend eine Kommunikationsvorrichtung zu bedienen, die von einem lokalen Zugangsknoten verlegt wurde.

9. Verfahren nach einem vorangehenden Anspruch, umfassend, in Antwort auf ein Bestimmen, dass eine Interferenzsteuerung zwischen lokalen Zugangsknoten nicht mehr erforderlich ist, ein Veranlassen einer Reaktivierung der zumindest teilweise unterbrochenen drahtlosen Kommunikationen und Verlegen der übertragenen Kommunikationsvorrichtungen zurück zu der zumindest einen Basisstation.

10. Vorrichtung zur Interferenzsteuerung, wobei die Vorrichtung zumindest einen Prozessor und zumindest einen Speicher umfasst, der einen Computerprogrammcode enthält, wobei der zumindest eine Speicher und der Computerprogrammcode mit dem zumindest einen Prozessor konfiguriert sind zum:
Einleiten einer Zusammenarbeit zwischen zumindest zwei Zugangsknoten (106; 107; 116; 118; 120) als Antwort auf eine Angabe einer Interferenz, die drahtlose Kommunikationen durch Zugangsknoten beeinträchtigt,
Bestimmen zumindest eines lokalen Zugangsknotens für unterbrochene drahtlose Kommunikationen
Veranlassen einer Unterbrechung zumindest eines Teils drahtloser Kommunikationen des zumindest einen lokalen Zugangsknotens und
**dadurch gekennzeichnet, dass** sie konfiguriert sind, zumindest eines auszuführen von:
Umschalten des zumindest einen lokalen Zugangsknotens in einen diskontinuierlichen Empfangs- oder Sendemodus oder einen Bereitschaftsmodus; und
Ausschalten eines Senders des zumindest einen lokalen Zugangsknotens.

11. Vorrichtung nach Anspruch 10, wobei die Vorrichtung konfiguriert ist, unterbrochene drahtlose Kommunikationen auf zumindest einer gemeinsam benutzten Spektrumressource oder einer Kanalressource zu veranlassen.

12. Vorrichtung nach einem der Ansprüche 10 bis 11, wobei der zumindest eine lokale Zugangsknoten eine Femtozelle bereitstellt, wobei die Vorrichtung konfiguriert ist, ein Verlegen zumindest einer Kommunikationsvorrichtung (103), die durch die unterbrochenen drahtlosen Kommunikationen beeinträchtigt ist, von dem zumindest einen lokalen Zugangsknoten zu veranlassen, wobei das Verlegen eine Übergabe der zumindest einen Kommunikationsvorrichtung zu einer anderen Femtozelle, Pikozelle oder Makrozelle umfasst.

13. Vorrichtung nach einem der Ansprüche 10 bis 12, wobei die Vorrichtung konfiguriert ist, eine zentralisierte Interferenzsteuerungszusammenarbeit oder zumindest eine teilweise verteilte Interferenzsteuerungszusammenarbeit zwischen lokalen Zugangsknoten bereitzustellen.

14. Vorrichtung nach einem der Ansprüche 10 bis 13, wobei die Vorrichtung konfiguriert ist, eine Interferenzsteuerungszusammenarbeit in Antwort auf ein Erfassen zumindest eines von einem Ausfall auf einem Steuerkanal, einem Ausfall auf einer gemeinsam benutzten Funkressource, einem Abfall in einer Funkleistung und einer Anzahl aktiver lokaler Zugangsknoten, die einen Schwellenwert überschreiten, auszulösen.

15. Computerprogramm, umfassend Codemittel, die ausgebildet sind, die Schritte nach einem der Ansprüche 1 bis 9 auszuführen, wenn das Programm auf einem Prozessor läuft.

## Revendications

1. Un procédé de contrôle de brouillage, comprenant :
le lancement (40) d'une coopération entre au moins deux noeuds d'accès (106; 107; 116; 118; 120) en réponse à une indication de brouillage affectant des communications sans fil par des noeuds d'accès,
la détermination (42) d'au moins un noeud d'accès local destiné à des communications sans fil interrompues, et
l'interruption (44) d'au moins une partie des communications sans fil du au moins un noeud d'accès local,
le procédé étant **caractérisé en ce qu'**il comprend au moins une étape parmi :
la commutation du au moins un noeud d'accès local vers un mode d'émission ou de réception discontinue ou un mode en attente, et
la mise hors tension d'un émetteur du au moins un noeud d'accès local.

2. Un procédé selon la revendication 1, comprenant l'interruption de communications sans fil sur au moins une ressource de spectre partagée ou une ressource de canal.

3. Un procédé selon l'une quelconque des revendications précédentes, dans lequel le au moins un noeud d'accès local fournit une femtocellule, le procédé comprenant la relocalisation (46) d'au moins un dispositif de communication (103) affecté par les communications interrompues à partir du au moins un noeud d'accès local et dans lequel la relocalisation comprend le transfert du au moins un dispositif de communication à une autre femtocellule, une picocellule ou une macrocellule.

4. Un procédé selon l'une quelconque des revendications précédentes, comprenant la fourniture d'une coopération de contrôle de brouillage centralisée ou d'une coopération de contrôle de brouillage au moins partiellement distribuée entre des noeuds d'accès locaux.

5. Un procédé selon l'une quelconque des revendications précédentes, dans lequel le contrôle est basé sur au moins un élément parmi une liste de noeuds d'accès locaux participants, une liste d'utilisateurs, des conditions prédéfinies déclenchant des communications interrompues et une politique de sélection de noeuds d'accès locaux pour des communications interrompues.

6. Un procédé selon l'une quelconque des revendications précédentes, dans lequel l'indication comprend une indication d'au moins un élément parmi une panne sur un canal de commande, une panne sur une ressource radio partagée, une chute de performances radio et un nombre de noeuds d'accès locaux actifs dépassant un seuil.

7. Un procédé selon l'une quelconque des revendications précédentes, dans lequel la détermination comprend la sélection d'un ou de plusieurs noeuds d'accès locaux qui possèdent au moins une caractéristique parmi : le plus grand nombre de voisins, un trafic de desserte au mieux, la charge la plus élevée, le nombre le plus faible d'utilisateurs actifs, la pire panne subie, les capacités avancées les moins pertinentes et la durée la plus longue sans sélection de mise hors tension.

8. Un procédé selon l'une quelconque des revendications précédentes, comprenant l'envoi d'une demande destinée à ordonner à un noeud d'accès de desservir au moins temporairement un dispositif de communication relocalisé à partir d'un noeud d'accès local.

9. Un procédé selon l'une quelconque des revendications précédentes, comprenant, en réponse à la détermination qu'un contrôle de brouillage entre des noeuds d'accès locaux n'est plus nécessaire, la réactivation des communications sans fil au moins partiellement interrompues et la relocalisation en retour de dispositifs de communication transférés vers la au moins une station de base.

10. Un appareil destiné à un contrôle de brouillage, l'appareil comprenant au moins un processeur et au moins une mémoire contenant du code de programme informatique, la au moins une mémoire et le code de programme informatique étant configurés, avec le au moins un processeur, de façon à
lancer une coopération entre au moins deux noeuds d'accès (106; 107; 116; 118; 120) en réponse à une indication de brouillage affectant des communications sans fil par des noeuds d'accès,
déterminer au moins un noeud d'accès local destiné à des communications sans fil interrompues,
interrompre au moins une partie des communications sans fil du au moins un noeud d'accès local, et
**caractérisé en ce qu'**il est configuré de façon à exécuter au moins une étape parmi :
la commutation du au moins un noeud d'accès local vers un mode d'émission ou de réception discontinue ou un mode en attente, et
la mise hors tension d'un émetteur du au moins un noeud d'accès local.

11. Un appareil selon la revendication 10, dans lequel l'appareil est configuré de façon à provoquer des communications sans fil interrompues sur au moins une ressource de spectre partagée ou une ressource de canal.

12. Un appareil selon l'une quelconque des revendications 10 à 11, dans lequel le au moins un noeud d'accès local fournit une femtocellule, l'appareil étant configuré de façon à amener une relocalisation d'au moins un dispositif de communication (103) affecté par les communications sans fil interrompues à partir du au moins un noeud d'accès local, dans lequel la relocalisation comprend le transfert du au moins un dispositif de communication vers une autre femtocellule, une picocellule ou une macrocellule.

13. Un appareil selon l'une quelconque des revendications 10 à 12, dans lequel l'appareil est configuré de façon à fournir une coopération de contrôle de brouillage centralisée ou une coopération de contrôle de brouillage au moins partiellement distribuée entre des noeuds d'accès locaux.

14. Un appareil selon l'une quelconque des revendications 10 à 13, dans lequel l'appareil est configuré de façon à déclencher une coopération de contrôle de brouillage en réponse à la détection d'au moins un élément parmi une panne sur un canal de commande, une panne sur une ressource radio partagée, une chute de performances radio et un nombre de noeuds d'accès locaux actifs dépassant a seuil.

15. Un programme informatique comprenant un moyen de code adapté de façon à exécuter les étapes selon l'une quelconque des revendications 1 à 9 lorsque le programme est exécuté sur un processeur.
